# EUROPEAN PATENT SPECIFICATION

(11) **EP 2 797 740 B1**
(45) Date of publication and mention of the grant of the patent: **06.04.2016**
(21) Application number: 13824357.1
(22) Date of filing: 22.11.2013
(51) Int. Cl.: B32B 5/00, B32B 5/28, B32B 7/02, B32B 9/00, B32B 19/02, B32B 27/02, B32B 27/08, B32B 27/12, B32B 27/18, B32B 27/20, B32B 27/28, B32B 27/32, B32B 27/36

(54) **MULTILAYER LAMINATE FOR THE MANUFACTURING OF INSULATING PANELS**
MEHRSCHICHTLAMINAT ZUR HERSTELLUNG VON DÄMMPLATTEN
STRATIFIÉ MULTI-COUCHES POUR LA FABRICATION DE PANNEAUX D'ISOLATION

(30) Priority: 26.11.2012 IT MI20121999
(43) Date of publication of application: 05.11.2014
(73) Proprietor: Sintostamp S.p.A., 46017 Rivarolo Mantovano (MN) (IT)
(72) Inventor: FEDERICI, Massimiliano, I-46019 Viadana MN (IT)
(74) Representative: Spina, Alessandro
(86) International application number: PCT/IB2013/060339
(87) International publication number: WO 2014/080371

(56) References cited:
- EP-A1- 2 364 841
- EP-A2- 1 690 968
- WO-A2-2009/131368
- GB-A- 1 244 845
- GB-A- 1 359 687
- GB-A- 1 394 824
- US-A1- 2006 105 166
- US-B2- 7 887 900

## Description

The present invention generally relates to the field of building and construction, and in particular to a multilayer laminate for the manufacturing of insulated panels.

In the field of building and construction there are known insulated panels for making roofs, walls and ventilated floors. Such panels generally have a sandwich structure wherein a member made of an insulating material, typically polyurethane foam, is enclosed between two sheet metal elements. The outer member of an insulated panel, which is meant to face the external environment, generally has an undulating profile with ridges or corrugations improving aesthetic appearance and structural strength. The inner element, which is intended to face the opposite direction, e.g. an internal environment, is instead generally smooth or provided with a fretted profile obtained in low relief to facilitate positioning and anchoring of the insulated panel on a supporting structure.

It is known that in order to ensure surface continuity of a coating made up of insulated panels, the outer and inner sheet metal elements protrude transversely, e.g. on opposite sides, so as to obtain a partial overlapping effect of the panels when installed, which ensures closing of the gaps between adjacent insulated panels. For instance, the protruding portions of the outer elements may be hook shaped so as to allow coupling between adjacent panels by exploiting their ridge-shaped profiles, corrugated profiles and the like, while the projecting portions of the inner elements may be shaped so as to form supporting surfaces for the adjacent panels.

In the case of the construction of insulated roofs, walls and ventilated floors in industrial buildings such as sheds and stables, wherein the inner environment is chemically aggressive due to humidity and to the presence of corrosive substances, it is used to make insulated panels wherein the inner element is made of a fiberglass sheet suitable to resist corrosion and not of sheet metal.

The patent publication EP 1690968 A2 discloses a method for the manufacturing of fiberglass plates for applications in the construction of roofs, according to which a mixture of glass fibers and a liquid binder is applied to a layer of a nonwoven polyester fabric and subsequently made to cure. Documents US7887900 and GB1244845 disclose multilayer membranes suitable for making roots.

Similarly to insulated panels with inner and outer elements made of sheet metal, the inner fiberglass elements of insulated panels for chemically aggressive environments protrude transversely from one side, thus allowing to obtain supporting surfaces for adjacent panels during their installation.

It is known that fiberglass is a very fragile material and must be handled with the utmost care both during processing and installation. In the case of insulated panels for chemically aggressive environments, the transversely projecting portion of the inner fiberglass element may be easily broken if a panel falls or is handled carelessly. Moreover, fiberglass plates have a limited resistance to bending, which results in a poor load capacity of roofs made up of this type of insulated panels.

There is therefore the need to find alternative materials for the manufacturing of the inner elements of insulated panels for chemically aggressive environments, which is an object of the present invention.

It is also an object of the present invention to provide a suitable material for chemically aggressive environments that is cheaper than fiberglass.

An idea of solution underlying the present invention is to make a multilayer laminate comprising a sandwich structure consisting of a pair of layers made of a blend of polyethylene terephthalate and low-density polyethylene between which a layer made of such mixture of polymers added with glass fibers is arranged. The multilayer of the invention is resistant to chemically aggressive environments such as fiberglass and therefore particularly suitable for the manufacturing of insulated panels for chemically aggressive environments, but features flexural and impact strength that are much greater than flexural and impact strength of fiberglass, thus allowing to solve the technical problems mentioned above.

Alternatively to low-density polyethylene, the multilayer according to the invention may be manufactured by using medium-density polyethylene, or high-density polyethylene. The materials used in the mixture of polymers may be virgin materials or recycled material, in this case allowing to remarkably reduce the manufacturing costs of the multilayer.

An important advantage provided by the invention is that unlike fiberglass the multilayer of the invention is plastically deformable at room temperature, which allows to manufacture the inner element similarly to the outer one in the case of insulated panels, namely by way of plastic deformation, thus being able to obtain shaped elements entirely similar to those made of sheet metal.

Another advantage provided by the invention is that unlike fiberglass the multilayer of the invention is suitable for direct bonding to polyurethane foam, which allows to simplify the manufacturing process of insulated panels and to reduce its costs.

Another advantage provided by the invention is that the materials of which the multilayer is made are suitable for use in the manufacturing of insulated panels for refrigerating rooms because, unlike fiberglass, they do not release food hazardous substances.

Further advantages and features of the multilayer according to the present invention will become clear to those skilled in the art from the following description with reference to the attached drawings, wherein:
- Figure 1 is a cross-sectional view schematically showing a multilayer according to the invention;
- Figure 2 is a perspective view showing an insulated panel comprising an inner element formed by the multilayer according to the invention;
- Figure 3 is a detail III of figure 2 schematically showing the multilayer of figure 1 applied to the insulated panel of figure 2.

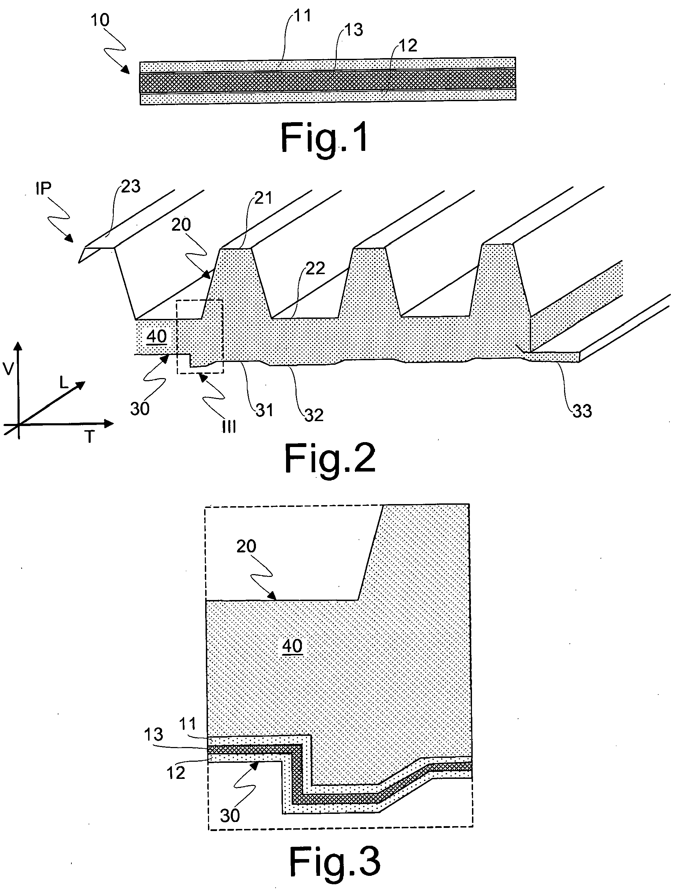

Referring to figure 1, the multi-layer laminate 10 according to the invention comprises a first layer 11 made of a mixture of polymers comprising polyethylene terephthalate (PET) and low-density polyethylene (LDPE), a second layer 12 made of such a mixture of polymers and a third layer 13 sandwiched between the first layer 11 and second layer 12. The third layer 13 is made of the mixture of polymers of the first and second layers 11, 12, added with glass fibers.

Alternatively to the low-density polyethylene (LDPE), the mixture of polymers may comprise medium-density polyethylene (MDPE), or high-density polyethylene (HDPE).

The sandwich structure of the multilayer 10 is obtained by way of a co-extrusion and subsequent calendering process.

The mixture of polymers forming the individual layers of the multilayer 10 comprises from 6% to 14% by weight of one among low-density polyethylene, medium-density polyethylene, or high-density polyethylene, the remainder being polyethylene terephthalate. In order to make the manufacturing process cheaper, the same mixture of polymers is used to make the three layers 11, 12 and 13. It will be understood, however, that this condition is not binding in the invention and that the three layers 11, 12 and 13 of the multilayer 10 might be made with different mixtures of polymers falling within the general formulation defined above.

The amount of glass fibers added to the mixture of polymers that form the third layer 13 is comprised between 8% and 20% by weight and is preferably 10% by weight.

Glass fibers are added to the mixture of polymers intended to form the third layer 13 by way of a common dispenser, so that they form a homogeneous mixture with the polymers within the extruder. In other words, glass fibers are dispersed homogeneously in the polymer matrix that forms the third layer 13.

Polyethylene terephthalate, low-density, medium-density, and high-density polyethylene may be virgin materials, or may advantageously be recycled materials, which allows to reduce the manufacturing costs of the multilayer 10.

The third layer 13 of the multilayer 10 according to the invention has a thickness comprised between 100 and 1400 microns, while the first and second layers 11, 12 have a thickness varying between 20 and 80 microns, thus forming protective veils of the supporting structure of the multilayer 10, i.e. the third layer 13 added with glass fibers, said veils being adapted to prevent loss of glass fibers into the environment.

The multilayer 10 of the invention has chemical resistance characteristics comparable to those of fiberglass and is therefore particularly suitable for the manufacturing of insulated panels for chemically aggressive environments. Compared to fiberglass, the multilayer 10 according to the invention has a much greater resistance to bending and shock, thus allowing to make insulated panels characterized by an increased load bearing capacity compared to insulated panels comprising an inner fiberglass element, which is of a fundamental importance for the construction of roofs and ventilated floors.

Furthermore, the multilayer 10 of the invention is plastically deformable at room temperature. In the case of insulated panels this allows to process the inner element in a similar way to the outer element, i.e. by way of plastic deformation starting from strips of raw material.

With reference to figures 2 and 3, there is shown an insulated panel IP comprising an outer element 20 made of sheet metal, for example painted galvanized sheet metal, an inner element 30 formed by the multilayer 10 according to the invention and an intermediate member 40 made of an insulating material, typically polyurethane foam, arranged between them. The insulated panel IP extends in a longitudinal direction L, which is the direction along which the outer element 20, inner element 30 and intermediate member 40 proceed during the manufacturing process of an insulated panel.

The sheet metal outer element 20 has a shaped profile, e.g. ridge-shaped, comprising a plurality of ridges 21 that extend from a base plane 22 substantially in a vertical direction V perpendicular to the longitudinal direction L. The ridge-shaped profile provides the outer element 20 with a greater rigidity to bending compared to the rigidity a flat element would have, and therefore also to the finished insulated panel IP.

It is known that in order to allow adhesion to the intermediate member 40 made of polyurethane foam, the surface of the outer element 20 intended to face the intermediate member 40 is treated with a special glue or primer capable of interacting with the polyurethane foam during the curing process.

The outer element 20 protrudes from the insulated panel IP laterally in a transverse direction T, perpendicular to the longitudinal direction L and the vertical direction V, and may e.g. comprise a hook-shaped portion 23 whose profile corresponds to the e.g. ridge-shaped profile of the ridges 21 in order to allow connection between adjacent insulated panels during their installation.

Similarly to the outer element 20, the inner element 30 formed by the multilayer 10 according to the invention may be provided with an e.g. low relief profile suitable to provide a flexural rigidity higher than the flexural rigidity of a flat element. For instance, in the illustrated embodiment the inner element 30 comprises a plurality of recesses 31 formed in low relief from a base plane 32 in the vertical direction V.

The low relief profile and, more generally, a non-planar profile also has an aesthetic function in the finished insulated panel IP, because the inner element 30 is generally visible from the inside of a structure covered by a surface coating made of insulated panels.

The first and the second elements 11, 12 of the multilayer 10 may have different thicknesses. For example the first layer 11 has a thickness comprised between 20 and 50 microns, while the second layer 12 has a thickness between 50 and 80 microns. This feature is particularly advantageous in the manufacturing of insulated panels for chemically aggressive environments, wherein the thinner layer is used as an interface with the insulating intermediate member made of polyurethane foam, while the thicker layer is used as an interface with the chemically aggressive environment wherein an insulated panel will be used, as well as a protective layer of the third layer 13 added with glass fibers.

Differently from the outer sheet metal element 20, the multilayer 10 forming the inner element 30 of the finished insulated panel IP allows direct adhesion to the polyurethane used to make the intermediate member 40, i.e. adhesion without resorting to special glues or primers.

Besides the possibility to create ridge-shaped, corrugated or similar profiles by way of plastic deformation at room temperature, the multilayer 10 according to the invention may advantageously be provided with a surface finishing on the outer surfaces of the first and second layers 11, 12. The surface finishing may be e.g. a mirror polishing, preferably on the surfaces intended to face the chemically aggressive environment, or a roughening with or without graphic texture, that has the technical effect of increasing the gripping surface intended for adhesion to with the intermediate member 40 made of polyurethane foam.

The surface finishing of the multilayer 10 may be advantageously obtained during the manufacturing process by providing the drawing rollers that carry out calendering after the co-extrusion process with a suitable surface texture.

The inner element 30 protrudes from the insulated panel IP laterally in the transverse direction T and may e.g. comprise a supporting flat portion 33 suitable to enable connection between adjacent insulated panels during their installation. The flat portion 33 may e.g. protrude from the opposite side of the panel with respect to the hook portion 23. During installation the hook-shaped protruding portion 23 of the outer element 20 of an insulated panel IP engages a ridge 21' of the outer element of a first adjacent insulated panel IP' (not shown), while the flat portion 33 of the inner element 30 provides internal support to the inner element 30" of a second adjacent insulated panel IP" (not shown), whose hook-shaped portion 23" engages a ridge 21 of the outer element 20 of the insulated panel IP.

Thanks to the characteristics of plastic deformation at room temperature of the multilayer 10 according to the invention, the flat portion 33 of the inner element 30 may be advantageously folded on itself towards the intermediate member 40, thus allowing to increase the flexural rigidity of the flat portion 33 for benefit of the load bearing capacity of a coated surface made up of a plurality of insulated panels IP of the type described above.

As shown in figure 2, the folded flap of the inner element 30 is preferably spaced from its flat surface 32, advantageously allowing to increase the contact surface with the polyurethane foam forming the intermediate member 40.

In order to prevent formation of thermal bridges that would negatively affect the insulation characteristics, the outer and the inner elements of traditional insulated panels are spaced apart from one another and by the intermediate member made of an insulating material.

The intermediate member may be hidden and protected along the sides of the insulated panel in the longitudinal direction L by way of adhesive tapes or gaskets applied directly during the manufacturing process.

The mixture of polymeric materials forming the layers of the multilayer 10 according to the invention is poorly conductive from a thermal point of view. Thanks to this feature and to the possibility of carrying out plastic deformation at room temperature, in order to laterally enclose the intermediate member 40 it is possible to connect the inner 30 and outer 20 elements by simply shaping the inner element to form lateral extensions having a height corresponding to the distance between the two elements. This allows to avoid use of adhesives or gaskets during the manufacturing of insulated panels, since it is possible to achieve the same result by suitably shaping the inner element 30. This solution also allows to reduce the manufacturing costs of an insulated panel.

## Claims

1. A multilayer laminate (10) comprising a first layer (11) made of a blend of polymers comprising polyethylene terephthalate and a material selected from low-density polyethylene, medium density polyethylene and high density polyethylene; a second layer (12) made of said blend of polymers; and a third layer (13) arranged between said first and second layer (11, 12), said third layer (13) being made of said blend of polymers comprising added glass fibers, wherein the polymer blend comprises from 6% to 14% by weight of one among low-density polyethylene, medium density polyethylene or high density polyethylene, the remainder being polyethylene terephthalate.

2. A multilayer laminate (10) according to claim 1, wherein the amount of glass fibers added to the blend of polymers that forms the third layer (13) is comprised between 8% and 20% by weight.

3. A multilayer laminate (10) according to claim 1 or 2, wherein the thickness of said first and second layers (11, 12) is comprised between 20 and 80 microns, and the thickness of said third layer (13) is comprised between 100 and 1400 microns.

4. A multilayer laminate (10) according to claim 3, wherein the first layer (11) has a thickness comprised between 20 and 50 microns, while the second layer (12) has a thickness comprised between 50 and 80 microns.

5. A multilayer laminate (10) according to any one of claims 1 to 4, wherein the surfaces of said first and second layers (11, 12) intended to be exposed to the external environment are provided with a surface texture.

6. An insulating panel (IP) comprising an outer sheet metal element (20), an intermediate member (40) made of an insulating material and an inner element (30), wherein said intermediate member (40) is arranged between said outer element (20) and inner element (30), **characterized in that** the inner element (30) is made of a multilayer laminate (10) according to any one of claims 1 to 5.

## Patentansprüche

1. Ein Mehrschichtlaminat (10), umfassend eine erste Schicht (11) aus einem Polymerblend, umfassend Polyethylenterephthalat und ein Material, ausgewählt aus Polyethylen niedriger Dichte, Polyethylen mittlerer Dichte und Polyethylen hoher Dichte; eine zweite Schicht (12) aus dem besagten Polymerblend; und eine dritte Schicht (13), welche zwischen der besagten ersten und zweiten Schicht (11, 12) angeordnet ist, wobei die besagte dritte Schicht (13) aus dem besagten Polymerblend mit hinzugefügten Glasfasern hergestellt ist, wobei das Polymerblend von 6 Gew.-% bis 14 Gew.-% von einem Polyethylen niedriger Dichte, Polyethylen mittlerer Dichte oder Polyethylen hoher Dichte umfasst, wobei der Rest Polyethylenterephthalat ist.

2. Ein Mehrschichtlaminat (10) nach Anspruch 1, wobei die Menge der zu demjenigen Polymerblend, welches die dritte Schicht (13) bildet, hinzugefügten Glasfasern zwischen 8 Gew.-% und 20 Gew.-% liegt.

3. Ein Mehrschichtlaminat (10) nach Anspruch 1 oder 2, wobei die Dicke der besagten ersten und zweiten Schichten (11, 12) zwischen 20 und 80 Mikron liegt, und die Dicke der besagten dritten Schicht (13) zwischen 100 und 1400 Mikron liegt.

4. Ein Mehrschichtlaminat (10) nach Anspruch 3, wobei die besagte erste Schicht eine Dicke zwischen 20 und 50 Mikron hat, während die zweite Schicht (12) eine Dicke zwischen 50 und 80 Mikron hat.

5. Ein Mehrschichtlaminat (10) nach einem der Ansprüche 1 bis 4, wobei die Oberflächen der besagten ersten und zweiten Schichten (11, 12), welche der äußeren Umgebung ausgesetzt werden sollen, mit einer Oberflächentextur versehen sind.

6. Ein Isolationspaneel (IP), umfassend ein äußeres Metallblech-Element (20), ein Zwischen-Element (40) aus einem Isolationsmaterial, und ein inneres Element (30), wobei das besagte Zwischen-Element (40) zwischen dem besagten äußeren Element (20) und dem inneren Element (30) angeordnet ist, **dadurch gekennzeichnet, dass** das innere Element (30) aus einem Mehrschichtlaminat (10) nach einem der Ansprüche 1 bis 5 besteht.

## Revendications

1. Stratifié multicouche (10) comprenant une première couche (11) constituée d'un mélange de polymères comprenant du poly(téréphtalate d'éthylène) et un matériau choisi parmi le polyéthylène basse densité, le polyéthylène moyenne densité et le polyéthylène haute densité ; une deuxième couche (12) constituée dudit mélange de polymères ; et une troisième couche (13) agencée entre ladite première et deuxième couche (11, 12), ladite troisième couche (13) constituée dudit mélange de polymères comprenant des fibres de verre ajoutées, dans lequel le mélange de polymères comprend de 6 à 14 % en poids d'un polyéthylène choisi parmi un polyéthylène basse densité, un polyéthylène moyenne densité ou un polyéthylène haute densité, le reste étant du poly(téréphtalate d'éthylène).

2. Stratifié multicouche (10) selon la revendication 1, dans lequel la quantité de fibres de verre ajoutées au mélange de polymères qui forme la troisième couche (13) représente entre 8 et 20 % en poids.

3. Stratifié multicouche (10) selon la revendication 1 ou 2, dans lequel l'épaisseur desdites première et deuxième couches (11, 12) est comprise entre 20 et 80 microns, et l'épaisseur de ladite troisième couche (13) est comprise entre 100 et 1400 microns.

4. Stratifié multicouche (10) selon la revendication 3, dans lequel la première couche (11) a une épaisseur comprise entre 20 et 50 microns, tandis que la deuxième couche (12) a une épaisseur comprise entre 50 et 80 microns.

5. Stratifié multicouche (10) selon l'une quelconque des revendications 1 à 4, dans lequel les surfaces desdites première et deuxième couches (11, 12) destinées à être exposées à l'environnement externe sont pourvues d'une texture de surface.

6. Panneau isolant (IP) comprenant un élément extérieur de type feuille métallique (20), un élément intermédiaire (40) à base d'un matériau isolant et un élément intérieur (30), dans lequel ledit élément intermédiaire (40) est agencé entre ledit élément extérieur (20) et ledit élément intérieur (30), **caractérisé en ce que** l'élément intérieur (30) est constitué d'un stratifié multicouche (10) selon l'une quelconque des revendications 1 à 5.
